# EUROPEAN PATENT APPLICATION

(11) **EP 4 827 153 A1**
(43) Date of publication of application: **21.10.2026**
(21) Application number: 25738575.7
(22) Date of filing: 10.01.2025
(51) Int. Cl.: H04W 24/02

(54) **MEASUREMENT TIME CONFIGURATION METHOD, APPARATUS, CHIP, AND STORAGE MEDIUM**

(30) Priority: 12.01.2024 CN 202410055020
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Goddar, Heinz J.
(86) International application number: PCT/CN2025/071812
(87) International publication number: WO 2025/149048

(57) **Abstract**

Embodiments of this application provide a measurement time configuration method and apparatus, a chip, and a storage medium. The method includes: A network device sends first indication information to a terminal device, where the first indication information is used for indicating configuration information of at least two measurement times within a measurement period. The terminal device receives the first indication information sent by the network device, and obtains positions of the at least two measurement times according to the first indication information, to configure a plurality of measurement times with intervals therebetween within the measurement period. According to the method of this application, an overlapping area between the measurement times and service data transmission can be reduced, and a conflict between the measurement times and the service data transmission can be reduced, thereby reducing an impact of the measurement times on the service data transmission and improving efficiency of the service data transmission.

## Description

This application claims priority to Chinese Patent Application No. 202410055020.2, filed with the China National Intellectual Property Administration on January 12, 2024 and entitled "MEASUREMENT TIME CONFIGURATION METHOD AND APPARATUS, CHIP, AND STORAGE MEDIUM", which is incorporated herein by reference in its entirety.

### TECHNICAL FIELD

This application relates to the field of communication technologies, and in particular, to a measurement time configuration method and apparatus, a chip, and a storage medium.

### BACKGROUND

With development of communication technologies, an existing wireless communication system provides measurement times for measurement. The measurement times include a measurement gap (Measurement Gap, MG). The measurement gap is an important network optimization function in the wireless communication system. A terminal device (User Equipment, UE) may perform signal quality measurement on the measurement gap, to support operations such as performance monitoring on a network, and cell reselection and handover. However, currently, when extended reality (Extended Reality, XR) service data is transmitted in the wireless communication system, if the transmission is within the measurement gap, the transmission of the service data is delayed until the measurement gap ends. There is a problem that the measurement gap has a significant impact on the service data transmission.

Therefore, how to reduce the impact of the measurement gap on the service data transmission is a problem that needs to be solved urgently.

### SUMMARY

Embodiments of this application provide a measurement time configuration method and apparatus, a chip, and a storage medium, applied to the field of communication technologies, to reduce an impact of a measurement gap on service data transmission.

According to a first aspect, an embodiment of this application provides a measurement time configuration method, including:

sending first indication information to a terminal device, where the first indication information may be used for indicating configuration information of at least two measurement times within a measurement period.

Optionally, the configuration information includes at least one of the following:

interval lengths between the measurement times, lengths of the measurement times, a quantity of the measurement times, and offsets of the measurement times.

Optionally, the offsets of the measurement times include an offset of a primary measurement time and/or an offset of a secondary measurement time within the measurement period, the primary measurement time is a first measurement time within the measurement period, and the secondary measurement time are measurement times within the measurement period other than the primary measurement time.

Optionally, if the offsets of the measurement times include the offset of the primary measurement time and the offset of the secondary measurement time within the measurement period, the offset of the primary measurement time within the measurement period is an offset of a measurement time pattern of the primary measurement time.

Optionally, if the offsets of the measurement times include the offset of the primary measurement time and the offset of the secondary measurement time within the measurement period, the offset of the primary measurement time is an offset of the primary measurement time relative to a reference position, and the offset of the secondary measurement time is an offset of the secondary measurement time relative to the reference position.

Optionally, the reference position is a start position of the measurement period, or the reference position is a start position of the primary measurement time, or the reference position is a position at which an offset of a measurement time pattern is a target value.

Optionally, the target value is 0.

Optionally, the interval lengths between the measurement times are interval lengths between measurement times within the measurement period, and the interval lengths between the measurement times are applied to a primary measurement time and/or a secondary measurement time.

Optionally, the interval lengths between the measurement times include a plurality of length values; and if the interval lengths between the measurement times are applied to the primary measurement time and the secondary measurement time, an N^{th} length value among the interval lengths between the measurement times is used for indicating an interval length between an N^{th} measurement time and a (N-1)^{th} measurement time within the measurement period, and N is an integer greater than or equal to 2.

Optionally, a first length value among the interval lengths between the measurement times is a value of an offset of the primary measurement time, or is a value of an offset of a measurement time pattern of the primary measurement time.

Optionally, if the interval lengths between the measurement times are applied to the secondary measurement time, the N^{th} length value among the interval lengths between the measurement times is used for indicating an interval length between a (N+1)^{th} measurement time and the N^{th} measurement time within the measurement period, and N is an integer greater than or equal to 1.

Optionally, interval lengths between adjacent measurement times among the at least two measurement times are the same, or measurement time lengths are the same.

According to a second aspect, an embodiment of this application provides a measurement time configuration method, including:
obtaining first indication information, where the first indication information may be used for indicating configuration information of at least two measurement times within a measurement period; and
obtaining positions of the at least two measurement times according to the first indication information.

Optionally, the obtaining first indication information includes:
receiving the first indication information sent by a network device.

Optionally, the configuration information includes at least one of the following:
interval lengths between the measurement times, lengths of the measurement times, a quantity of the measurement times, and offsets of the measurement times.

Optionally, the offsets of the measurement times include an offset of a primary measurement time and/or an offset of secondary measurement time within the measurement period, the primary measurement time is a first measurement time within the measurement period, and the secondary measurement time is a measurement time within the measurement period other than the primary measurement time.

Optionally, if the offsets of the measurement times include the offset of the primary measurement time and the offset of the secondary measurement time within the measurement period, the offset of the primary measurement time within the measurement period is an offset of a measurement time pattern of the primary measurement time.

Optionally, if the offsets of the measurement times include the offset of the primary measurement time and the offset of the secondary measurement time within the measurement period, the offset of the primary measurement time is an offset of the primary measurement time relative to a reference position, and the offset of the secondary measurement time is a offset of the secondary measurement time relative to the reference position.

Optionally, the reference position is a start position of the measurement period, or the reference position is a start position of the primary measurement time, or the reference position is a position at which an offset of a measurement time pattern is a target value.

Optionally, the target value is 0.

Optionally, the interval lengths between the measurement times are interval lengths between measurement times within the measurement period, and the interval lengths between the measurement times are applied to a primary measurement time and/or a secondary measurement time.

Optionally, the interval lengths between the measurement times include a plurality of length values; and if the interval lengths between the measurement times are applied to the primary measurement time and the secondary measurement time, an N^{th} length value among the interval lengths between the measurement times is used for indicating an interval length between an N^{th} measurement time and a (N-1)^{th} measurement time within the measurement period, and N is an integer greater than or equal to 2.

Optionally, a first length value among the interval lengths between the measurement times is a value of an offset of the primary measurement time, or is a value of an offset of a measurement time pattern of the primary measurement time.

Optionally, if the interval lengths between the measurement times are applied to the secondary measurement time, the N^{th} length value among the interval lengths between the measurement times is used for indicating an interval length between a (N+1)^{th} measurement time and the N^{th} measurement time within the measurement period, and N is an integer greater than or equal to 1.

Optionally, interval lengths between adjacent measurement times among the at least two measurement times are the same, or measurement time lengths are the same.

Optionally, the obtaining positions of the at least two measurement times according to the first indication information includes:
obtaining the offsets of the measurement times according to the first indication information; and
obtaining the positions of the measurement times according to the offsets of the measurement times.

Optionally, the obtaining the offsets of the measurement times according to the first indication information includes:
determining lengths of the measurement times or interval lengths between the measurement times according to the first indication information; and
obtaining the offsets of the measurement times according to the lengths of the measurement times or the interval lengths between the measurement times.

Optionally, the obtaining the positions of the measurement times according to the offsets of the measurement times includes:
obtaining a position of the primary measurement time according to the offset of the primary measurement time; and
obtaining a position of the secondary measurement time according to the position of the primary measurement time.

Optionally, the obtaining position of the secondary measurement time according to the position of the primary measurement time includes:
determining the offset of the primary measurement time according to a length of the primary measurement time, an interval length corresponding to the primary measurement time, lengths of the secondary measurement time, and interval lengths between the secondary measurement time; and
obtaining the position of the secondary measurement time according to the offset of the primary measurement time.

Optionally, the obtaining positions of the at least two measurement times according to the first indication information includes:
obtaining a position of the primary measurement time according to the offset of the primary measurement time; and
determining, according to a position of a current measurement time, a position of an adjacent next measurement time.

Optionally, the determining, according to a position of a current measurement time, a position of an adjacent next measurement time includes:
obtaining the position of the next measurement time according to the position of the current measurement time and an interval length between the adjacent next measurement time and the current measurement time.

Optionally, the offsets of the measurement times include the offset of the primary measurement time and the offset of the secondary measurement time within the measurement period, and the obtaining positions of the at least two measurement times according to the first indication information includes:
determining the positions of the measurement times according to the offsets of the measurement times.

Optionally, the obtaining positions of the at least two measurement times includes:
determining subframes included in the at least two measurement times; and
obtaining the positions of the at least two measurement times according to the subframes included in the at least two measurement times.

According to a third aspect, an embodiment of this application provides a measurement time configuration apparatus, the apparatus including:
a sending module, configured to send first indication information to a terminal device, where the first indication information is used for indicating configuration information of at least two measurement times within a measurement period.

According to a fourth aspect, an embodiment of this application provides a measurement time configuration apparatus, the apparatus including:
an obtaining module, configured to obtain first indication information, where the first indication information is used for indicating configuration information of at least two measurement times within a measurement period; and
a processing module, configured to obtain positions of the at least two measurement times according to the first indication information.

According to a fifth aspect, an embodiment of this application provides a measurement time configuration apparatus, the apparatus including: a processor, a transceiver, and a memory, where the processor is in communication connection with the transceiver and the memory;
the memory stores computer-executable instructions
the transceiver performs communication interaction with an external device; and
the processor executes the computer-executable instructions stored in the memory to implement the method according to any one of the implementations of the first aspect or any one of the implementations of the second aspect.

According to a sixth aspect, an embodiment of this application provides a chip, where the chip stores a computer program, and the computer program, when executed by the chip, implements the method according to any one of the implementations of the first aspect or any one of the implementations of the second aspect.

According to a seventh aspect, an embodiment of this application provides a computer-readable storage medium, where the computer-readable storage medium stores a computer program, and the computer program, when executed by a processor, implements the method according to any one of the implementations of the first aspect or any one of the implementations of the second aspect.

According to an eighth aspect, an embodiment of this application provides a computer program product, where the computer program product includes a computer program, and the computer program, when run, causes a computer to perform the method according to any one of the implementations of the first aspect or any one of the implementations of the second aspect.

According to the measurement time configuration method and apparatus, the chip, and the storage medium provided in this application, a terminal device determines positions of at least two measurement times within a measurement period according to first indication information obtained from a network device and used for indicating configuration information of at least two measurement gaps within the measurement period, and configures measurement times according to the positions of the at least two measurement times for measurement. Within the measurement period, an overlapping area between the measurement times and service data transmission is reduced by using measurement times with small lengths and with intervals therebetween, to reduce a conflict between the measurement times and the service data transmission, thereby reducing an impact of the measurement times on the service data transmission, and improving efficiency of the service data transmission.

### BRIEF DESCRIPTION OF DRAWINGS

FIG. 1 shows a communication system applicable to an embodiment of this application;
FIG. 2 is a schematic scenario diagram of a type of service data transmission according to an embodiment of this application;
FIG. 3 is a schematic scenario diagram of another type of service data transmission according to an embodiment of this application;
FIG. 4 is a schematic flowchart of a measurement time configuration method according to an embodiment of this application;
FIG. 5 is a schematic scenario diagram of a type of indicated measurement period according to an embodiment of this application;
FIG. 6 is a schematic scenario diagram of another type of indicated measurement periods according to an embodiment of this application;
FIG. 7 is a schematic flowchart of another measurement time configuration method according to an embodiment of this application;
FIG. 8 is a schematic scenario diagram of a type of measurement times according to an embodiment of this application;
FIG. 9 is a schematic scenario diagram of another type of measurement times according to an embodiment of this application;
FIG. 10 is a schematic scenario diagram of still another type of measurement times according to an embodiment of this application;
FIG. 11 is a schematic scenario diagram of yet another type of measurement times according to an embodiment of this application;
FIG. 12 is a schematic scenario diagram of still yet another type of measurement times according to an embodiment of this application;
FIG. 13 is a schematic flowchart of still another measurement time configuration method according to an embodiment of this application;
FIG. 14 is a schematic structural diagram of a measurement time configuration apparatus according to an embodiment of this application;
FIG. 15 is a schematic structural diagram of another measurement time configuration apparatus according to an embodiment of this application; and
FIG. 16 is a schematic structural diagram of still another measurement time configuration apparatus according to an embodiment of this application.

### DESCRIPTION OF EMBODIMENTS

To facilitate a clear description of the technical solutions in embodiments of this application, the words such as "example" or "for example" in the embodiments of this application are used to indicate an example, an illustration, or a description. Any embodiment or design solution described as "example" or "for example" in this application should not be construed as being preferred or advantageous over other embodiments or design solutions. To be specific, the use of the word such as "example" or "for example" is intended to present the related concepts in a specific manner.

In the embodiments of this application, "at least one" refers to one or more, and "a plurality of" refers to two or more. "And/or", which describes an association relationship between associated objects, represents that three relationships may exist. For example, A and/or B may represent the following cases: Only A exists, both A and B exist, and only B exists. A and B may be singular or plural. The character "/" generally indicates an "or" relationship between the associated objects. "At least one of the following" or an expression similar thereto means any combination of such items, including a single item or any combination of plural items. For example, at least one of a, b, or c may indicate: a, b, c, a and b, a and c, b and c, or a, b, and c, where a, b, and c may be singular or plural.

It should be noted that in the embodiments of this application, "when ... " may be an instantaneous occurrence time of a case, or may be a period of time after occurrence of a case, which is not specifically limited in embodiments of this application. In addition, a display interface provided in the embodiments of this application is merely used as an example, and the display interface may further include more or less content.

The technical solutions of the embodiments of this application may be applied to various communication systems, such as a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, new radio (new radio, NR), or a new system that may occur in the future.

For ease of understanding of the embodiments of this application, a communication system applicable to the embodiments of this application is first described in detail.

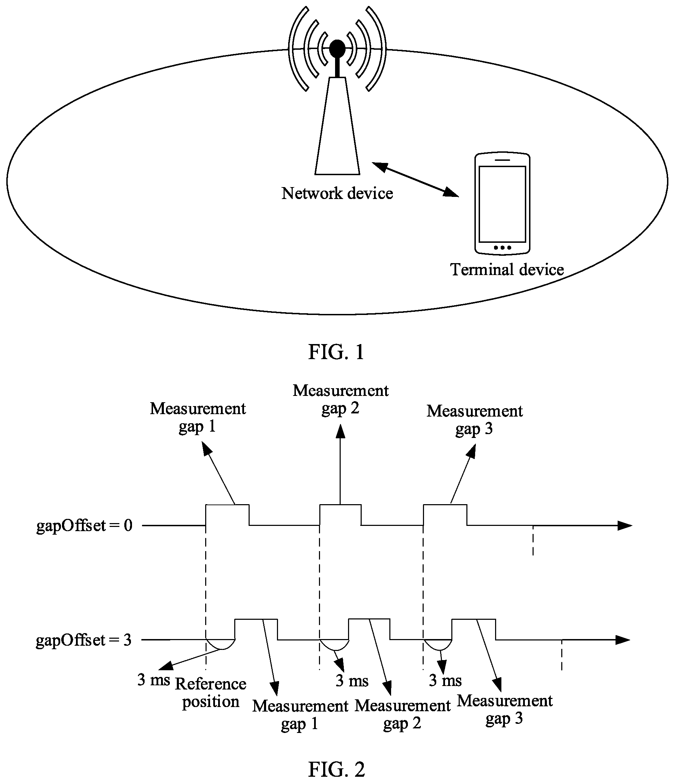

FIG. 1 shows a communication system applicable to an embodiment of this application. As shown in FIG. 1, the communication system includes: a network device and a terminal device.

The network device may communicate with the terminal device by using a radio link. When the network device serves as a communication transmitting end, the terminal device may serve as a communication receiving end, or when the network device serves as a communication receiving end, the terminal device may serve as a communication transmitting end. A quantity of network devices and a quantity of terminal devices that are included in the communication system are not limited in this embodiment of this application. In addition, it should be understood that FIG. 1 is only a schematic diagram, and the communication system may further include another network device. This is not limited in this application, and is not shown in FIG. 1.

A terminal device in the embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile station, a remote station, a remote terminal, a mobile device, a user terminal, a terminal, a wireless communication device, a user agent, a user apparatus, or the like.

The terminal device may be a device that provides voice and/or data connectivity for a user, for example, a handheld device or an in-vehicle device having a wireless connection function. Currently, some examples of the terminal device include: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device, a wearable device, a terminal device in a 5G network, a terminal device in a future evolved public land mobile network (public land mobile network, PLMN), or the like. This is not limited in embodiments of this application.

As an example rather than a limitation, in this application, the terminal device may be a terminal device in an Internet of Things (internet of things, IoT) system. Internet of Things is an important component in future development of information technologies, and a main technical feature thereof is connecting an object to a network by using a communication technology, to implement an intelligent network of humanmachine interconnection and interconnection between things. For example, the terminal device in embodiments of this application may be a wearable device. The wearable device may also be referred to as a smart wearable device, and is a collective term for wearable devices that are intelligently designed and developed for daily wear by using a wearable technology, for example, glasses, gloves, watches, clothes, and shoes. The wearable device is a portable device that can be directly worn on a body or integrated with clothes or an accessory of a user. The wearable device is more than a hardware device, and can even achieve a powerful function through software support, data interaction, and cloud interaction. Generalized wearable intelligent devices include fullfeatured and large-size devices that can implement complete or partial functions without depending on smartphones, such as smart watches or smart glasses, and devices that focus on only one type of application and need to work with other devices such as smartphones, such as various smart bracelets or smart jewelry for monitoring physical signs.

As an example rather than a limitation, in embodiments of this application, the terminal device may alternatively be a terminal device in machine type communication (machine type communication, MTC). In addition, the terminal device may alternatively be an in-vehicle module, an in-vehicle assembly, an in-vehicle component, an in-vehicle chip, an in-vehicle unit, or the like that is built into a vehicle as one or more components or units. A vehicle may perform the method provided in this application by using the built-in in-vehicle module, in-vehicle assembly, in-vehicle component, in-vehicle chip, in-vehicle unit, or the like. Therefore, embodiments of this application may also be applied to Internet of Vehicles, for example, vehicle to everything (vehicle to everything, V2X), long term evolution-vehicle (long term evolution-vehicle, LTE-V), or a vehicle-to-vehicle (vehicle-to-vehicle, V2V) technology.

The network device involved in this application may be a device communicating with the terminal device. The network device may also be referred to as an access network device or a wireless access network device. The network device may be a transmission reception point (transmission reception point, TRP), or may be an evolved NodeB (evolved NodeB, eNB or eNodeB) in an LTE system, or may be a home NodeB (for example, home evolved NodeB, or home Node B, HNB) or a base band unit (base band unit, BBU), or may be a radio controller in a cloud radio access network (cloud radio access network, CRAN) scenario. Alternatively, the network device may be a relay station, an access point, an in-vehicle device, a wearable device, a network device in a 5G network, a network device in a future evolved PLMN network, or the like, or may be an access point (access point, AP) in a WLAN, or may be a gNB in an NR system. The foregoing network device may alternatively be a metro base station, a micro base station, a pico base station, a femto base station, or the like. This is not limited in this application.

In a network structure, the network device may include a centralized unit (centralized unit, CU) node, a distributed unit (distributed unit, DU) node, or a RAN device including a CU node and a DU node, or a RAN device including a control plane CU node (CU-CP node), a user plane CU node (CU-UP node), and a DU node.

The network device provides a service to a cell. The terminal device communicates with the cell by using a transmission resource (for example, a frequency domain resource, or a spectrum resource) allocated by the network device. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells are characterized by a small coverage area and low transmit power, and are suitable for providing high-speed data transmission services.

Currently, the network device may configure, for a terminal device, a measurement gap (measurement gap, MG) for measurement. The measurement gap is a period during which the terminal device performs measurement on a specific frequency or cell when the terminal device does not transmit data. The measurement may include, for example, inter-frequency measurement or inter-radio access technology (radio access technology, RAT) measurement. Within the measurement gap, the terminal device stops data transmission, and the network device does not perform uplink and downlink scheduling. Therefore, using the measurement gap to perform measurement affects transmission of other service data. The measurement gap may be periodically configured, and a period of the measurement gap may be referred to as a measurement period.

Currently, when measurement gaps are configured, configuration information of the measurement gaps includes a measurement gap pattern (gap pattern) offset (gapOffset), a measurement gap length (measurement gap length, mgl), a measurement gap repetition period (measurement gap Repetition Period, mgrp) (namely a measurement period), and a measurement gap timing advance (measurement gap timing advance, mgta).

At least one of the measurement period or the measurement gap length differs between different measurement gap patterns. For example, the measurement gap patterns may include gp0, gp1, gp2-r14, gp3-r14, gp4-r15, gp5-r15, and the like. With LTE as an example, a measurement period of the pattern gp0 is 40 ms, and a measurement period of the pattern gp1 is 80 ms, but mgls of gp0 and gp1 is 6 ms, that is, duration of a measurement gap is 6 ms. Table 1 is a measurement gap pattern configuration table according to this application.

**Table 1**

| gap pattern Id | measurement gap length (mgl, ms) | Measurement gap repetition period (mgrp, ms) |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| ... | ... | ... |

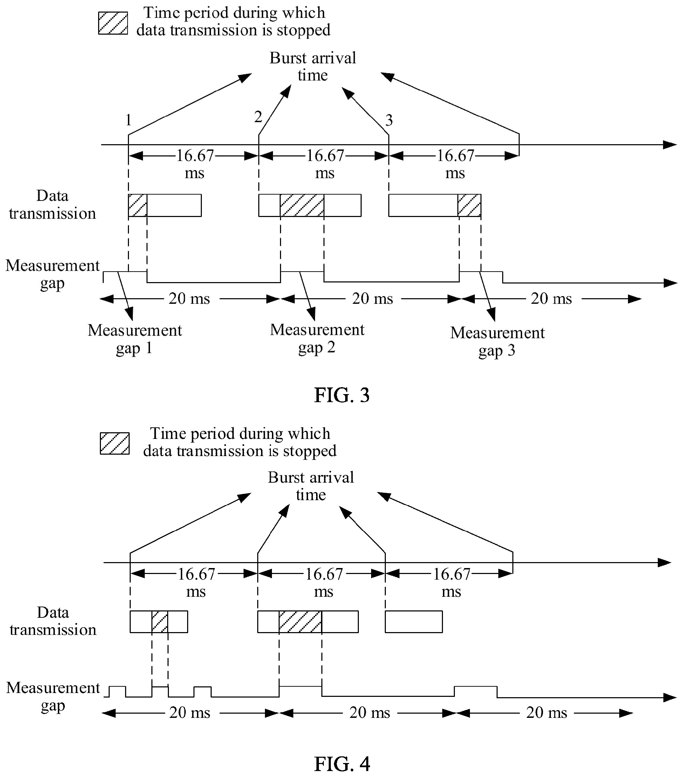

The offset gapOffset is an offset of a measurement gap pattern, and the offset may be used to indicate a start position of a measurement gap. For example, FIG. 2 is a schematic scenario diagram of a type of measurement gaps according to an embodiment of this application. As shown in FIG. 2, assuming that a start position of a measurement gap 1 is a reference position when gapOffset is 0, with other parameters unchanged, a gapOffset of 3 indicates that the measurement gap pattern is offset by 3 ms. That is, the measurement gap 1, a measurement gap 2, and a measurement gap 3 in FIG. 3 are all offset to the right by 3 ms. In this case, an offset between the start position of the measurement gap 1 and the reference position is 3 ms.

For example, content included in configuration information of current measurement gaps may be as follows:

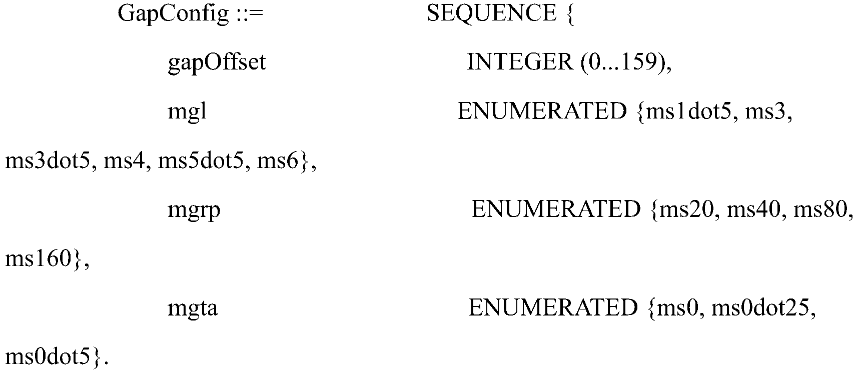

For example, FIG. 3 is a schematic scenario diagram of a type of service data transmission according to an embodiment of this application. As shown in FIG. 3, the service data is XR service data, a discontinuous reception (discontinuous reception, DRX) period of the service data is 16.67 ms, and a burst arrival time (Burst Arrivals) of the XR service data may be understood as a moment at which a preconfigured terminal device sends the XR service data to a network device. A period of measurement gaps used by the terminal device for measurement is 20 ms. In FIG. 3, each protruding portion is one measurement gap, and a length of each protruding portion is a length of the measurement gap.

Optionally, a burst arrival time 1 of the XR service data overlaps a measurement gap 1, that is, the burst arrival time 1 is within duration of the measurement gap 1. Therefore, the terminal device stops transmitting the XR service data within the duration of the measurement gap 1, and starts transmitting the XR service data after the measurement gap 1 ends.

Optionally, a burst arrival time 2 of the XR service data is before a measurement gap 2, and the terminal device starts to transmit the XR service data at the burst arrival time 2, and stops transmitting the XR service data when the measurement gap 2 starts. The remaining XR service data continues to be transmitted after the measurement gap 2 ends. By analogy, when starting to transmit the XR service data at a burst arrival time 3, the terminal device also needs to suspend transmission of the XR service data within duration of the measurement gap 3, and continues to transmit remaining XR service data after the measurement gap 3.

Therefore, it can be learned that when the terminal device performs measurement by using the measurement gaps, transmission of other service data may be affected within duration of the measurement gaps. However, if data transmission may be performed within the measurement gaps, accuracy of measurement may be affected, thereby affecting behaviors such as cell handover of the terminal device, and consequently degrading quality of a network environment in which the terminal device is located. Therefore, there is an urgent need to provide a method, so that an impact of measurement gaps on service data transmission can be reduced while normal measurement by the terminal device is maintained, thereby improving user experience.

In view of this, this application provides a measurement time configuration method. A terminal device configures a plurality of measurement times with relatively small lengths and with intervals therebetween within a measurement period according to measurement time configuration information delivered by a network device, to reduce an overlapping area between service data and the measurement times. This reduces a conflict between the measurement times and service data transmission and reduces duration during which transmission of the service data is suspended while maintaining quality of measurement within the period, thereby reducing an impact of the measurement times on the service data transmission and improving user experience.

FIG. 4 is a schematic scenario diagram of another type of service data transmission according to an embodiment of this application. As shown in FIG. 4, a first measurement period in FIG. 4 is configured as a plurality of (with three as an example in FIG. 4, this application is not limited to three) measurement times with relatively small lengths and with intervals therebetween, so that there is only one measurement time with a relatively small length that conflicts with transmission of service data. This reduces an overlapping area between the transmission of the service data and the measurement times, to reduce duration during which transmission of the service data is suspended, thereby reducing an impact of the measurement times on service data transmission, and improving user experience.

A data transmission method of this application is described in detail below with reference to the accompanying drawings. The embodiments shown in this application are executed by a terminal device or a network device. A specific form and quantity of the shown devices are merely examples, and should not be construed as any limitation to the implementation of the method provided in this application.

The terminal device in the embodiments of this application may be a terminal device, or may be a chip, a chip system, or a processor that supports a terminal device in implementing the data transmission method, or may be a logical module or software that can implement all or some functions of a terminal device. The network device in the embodiments of this application may be a network device, or may be a chip, a chip system, or a processor that supports a network device in implementing the data transmission method, or may be a logical module or software that can implement all or some functions of a network device. This is not specifically limited in this application.

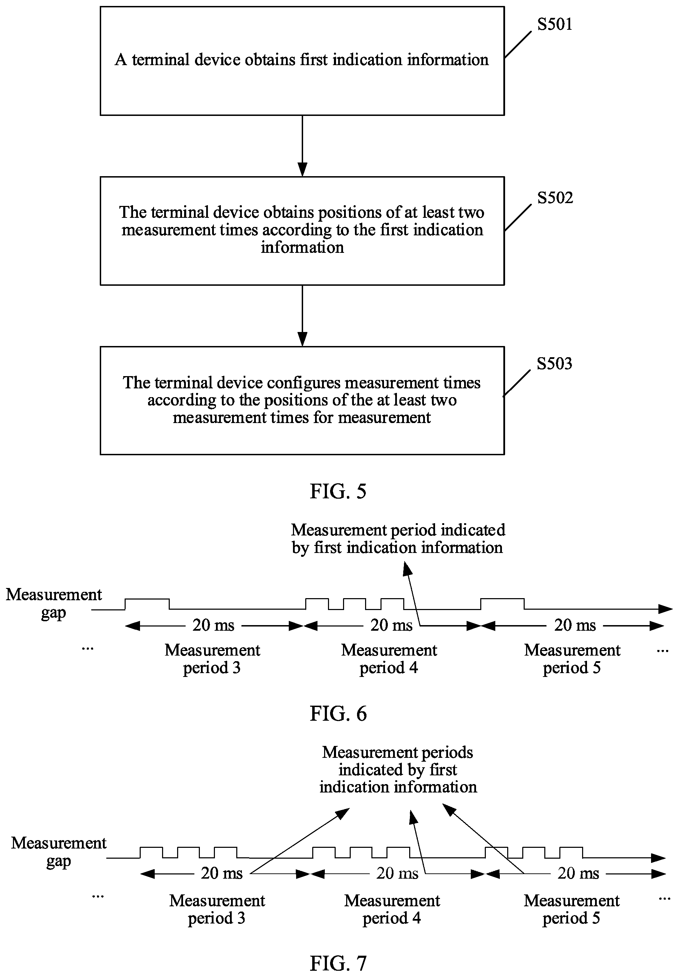

FIG. 5 is a schematic flowchart of a measurement time configuration method according to an embodiment of this application. As shown in FIG. 5, the method may include the following steps.

S501: A terminal device obtains first indication information.

The first indication information may be used to indicate configuration information of at least two measurement times within a measurement period. In another case, the first indication information may indicate configuration information that there is one measurement time within the measurement period. The measurement time includes a measurement gap or an SSB measurement time (SS/PBCH block measurement timing configuration, SMTC).

The first indication information may be indication information having a function of indicating configuration information of a measurement gap and a function of indicating configuration information of at least two measurement times within a measurement period, or may be indication information only used for indicating configuration information of at least two measurement times within a measurement period. When the first indication information indicates configuration information of at least two measurement times within a measurement period, the terminal device may configure the at least two measurement times within the measurement period according to the configuration information.

Optionally, in one measurement period, a total length of at least two measurement times included in the measurement period is equal to a total length of measurement gaps or SMTCs in an existing measurement period.

When measurement times include measurement gaps, configuration information of the measurement times is configuration information of the measurement gaps. When measurement times include SSB measurement times, configuration information of the measurement times is configuration information of the SSB measurement times. In subsequent embodiments, content included in the configuration information of the measurement times is described with an example in which the measurement times include the measurement gaps.

The first indication information may include the configuration information, or the first indication information may include an identifier that indicates the configuration information. When the first indication information includes the identifier that indicates the configuration information, the terminal device may determine the configuration information corresponding to the identifier from a preset configuration information list according to the identifier. The configuration information list may be preset in the terminal device, or may be preobtained by the terminal device from a network device or another device. The terminal device may determine at least two measurement times (for example, the first measurement period shown in FIG. 4) with intervals therebetween within the measurement period according to the configuration information indicated by the first indication information. Since the intervals exist between the measurement times and service data can also be transmitted within the intervals, duration during which transmission of the service data is suspended can be reduced, thereby reducing an impact of the measurement times on service data transmission and improving user experience. A sum of lengths of the at least two measurement times within the measurement period is a length that can satisfy a measurement requirement of the terminal device within the measurement period. For example, the sum of the lengths of the at least two measurement times is greater than or equal to a length of the measurement requirement.

The measurement period may be any measurement period of the terminal device, or may be any multiple measurement periods of the terminal device, or may be all measurement periods of the terminal device. With regard to the measurement period, which measurement period needs to be configured to include at least two measurement times may be determined according to a requirement for to-be-transmitted service data. For example, the measurement period indicated by the first indication information may be a next measurement period or next N measurement periods or all subsequent measurement periods of the terminal device, where N is an integer greater than or equal to 2.

In a possible implementation, the measurement period is indicated by the first indication information, and the measurement period indicated by the first indication information may be determined according to an actual requirement. This is not limited in this application.

In another possible implementation, the measurement period is indicated by using second indication information different from the first indication information, and the first indication information is only used to indicate configuration information of measurement times within the measurement period. For example, the second indication information may indicate activation/use of a configuration of at least two measurement times within the measurement period, or indicate use of the configuration information indicated by the first indication information.

For example, FIG. 6 is a schematic scenario diagram of a type of indicated measurement period according to an embodiment of this application. As shown in FIG. 6, the measurement period indicated by first indication information is a measurement period 4. That is, the first indication information is used to indicate a terminal device to configure the measurement period 4 as a measurement period that includes at least two measurement times with relatively small lengths and with intervals therebetween.

For example, FIG. 7 is a schematic scenario diagram of another type of indicated measurement period according to an embodiment of this application. As shown in FIG. 7, measurement periods indicated by first indication information are all measurement periods of a terminal device. That is, the first indication information is used to indicate the terminal device to configure all the measurement periods as measurement periods that each include at least two measurement times with relatively small lengths and with intervals therebetween.

Optionally, the first indication information may directly indicate that at least two measurement times are configured within the measurement period, or may indicate that an original measurement time within the measurement period (that is, there is only one measurement time with a relatively large length within the measurement period) is split into at least two measurement times.

Optionally, the configuration information may include at least one of interval lengths between the measurement times, lengths of the measurement times, a quantity of the measurement times, and offsets of the measurement times. Alternatively, the configuration information may include information related to a position of each measurement time in a time domain, and a time domain position of the measurement time may be determined according to the configuration information (for example, information such as a start position and a length of each measurement time in a time-domain resource may be included, to determine a position of the measurement time). The content included in the configuration information enables the terminal device to obtain how to configure at least two measurement times within the measurement period indicated by the first indication information. The foregoing four parameters are separately described below.

Interval lengths between the measurement times: used to indicate interval lengths between adjacent measurement times within the measurement period.

In an implementation, the interval length is a first interval length between start positions of adjacent measurement times.

In an implementation, the interval length is a second interval length between end positions of adjacent measurement times.

In an implementation, the interval length is a third interval length between an end position and a start position that are of adjacent measurement times respectively. For example, the third interval length is an interval length between an end position of a measurement time 1 and a start position of a measurement time 2, and the measurement time 1 is a measurement time preceding the measurement time 2.

For ease of description, subsequently, a first measurement time within a measurement period is referred to as a primary measurement time, and measurement times other than the first measurement time are referred to as secondary measurement times.

The interval lengths between the measurement times may be used for all the measurement times within the measurement period, or may be used for the second measurement time within the measurement period. When the interval lengths between the measurement times are used for all the measurement times within the measurement period, the interval lengths may be used for determining positions of the primary measurement time and the secondary measurement times. When the interval length between the measurement times is used for the secondary measurement times within the measurement period, the interval length between the measurement times is an interval length between start positions of every two adjacent measurement times among the secondary measurement times, and the interval length may be used for determining the positions of the secondary measurement times. In this case, the position of the primary measurement time may be determined according to an offset gapOffset of a measurement time pattern (that is, similar to the foregoing measurement gap pattern). In this case, gapOffset may be referred to as an interval length between measurement times corresponding to the primary measurement time. For different measurement times, interval lengths between the measurement times may be a same interval length, or may be all different interval lengths, or may be partially same interval lengths.

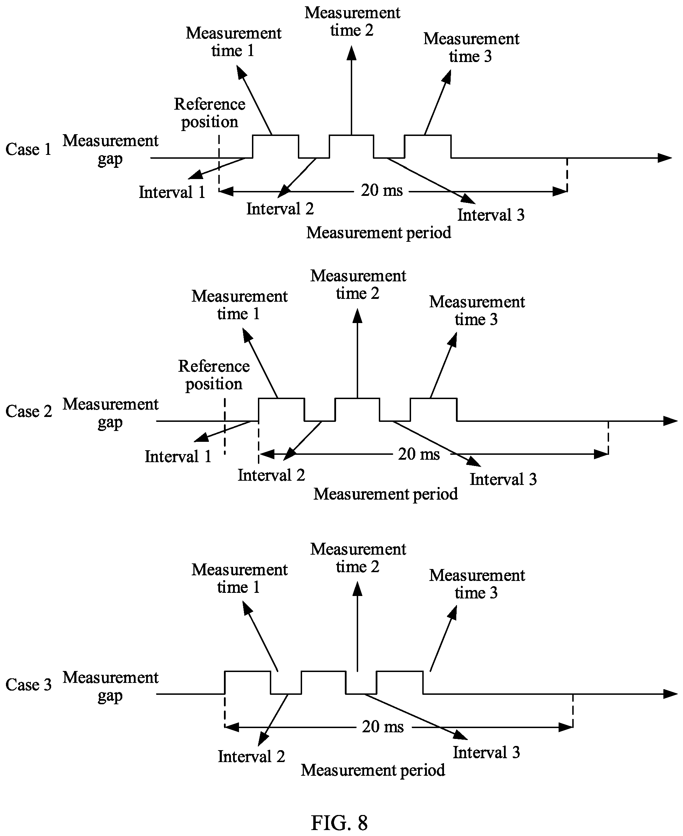

For example, FIG. 8 is a schematic scenario diagram of a type of measurement times according to an embodiment of this application. As shown in FIG. 8, three cases may be included. In the first case, a start position of a measurement period is a reference position. In the second case, a start position of a measurement period is a start position of a primary measurement time. In the third case, a start position of a measurement period, a start position of a primary measurement time, and a reference position are a same position.

If the start position of the measurement period is the reference position, an interval length corresponding to the primary measurement time (measurement time 1) is an interval 1 between a start position of the measurement time 1 and the start position of the measurement period, an interval length corresponding to a measurement time 2 among the secondary measurement times is an interval 2 between a start position of the measurement time 2 and an end position of the measurement time 1, and an interval length corresponding to a measurement time 3 among the secondary measurement times is an interval 3 between a start position of the measurement time 3 and an end position of the measurement time 2.

If the start position of the measurement period is the start position of the measurement time 1 and the reference position is a position where gapOffset is 0, an interval length corresponding to the primary measurement time (measurement time 1) is an interval 1 between a start position of the measurement time 1 and the reference position, an interval length corresponding to a measurement time 2 among the secondary measurement times is an interval 2 between a start position of the measurement time 2 and an end position of the measurement time 1, and an interval length corresponding to a measurement time 3 among the secondary measurement times is an interval 3 between a start position of the measurement time 3 and an end position of the measurement time 2.

If the start position of the measurement period, the start position of the primary measurement time, and the reference position are the same position, an interval length corresponding to the primary measurement time is 0, an interval length corresponding to a measurement time 2 among the secondary measurement times is an interval 2 between a start position of the measurement time 2 and an end position of the measurement time 1, and an interval length corresponding to a measurement time 3 among the secondary measurement times is an interval 3 between a start position of the measurement time 3 and an end position of the measurement time 2.

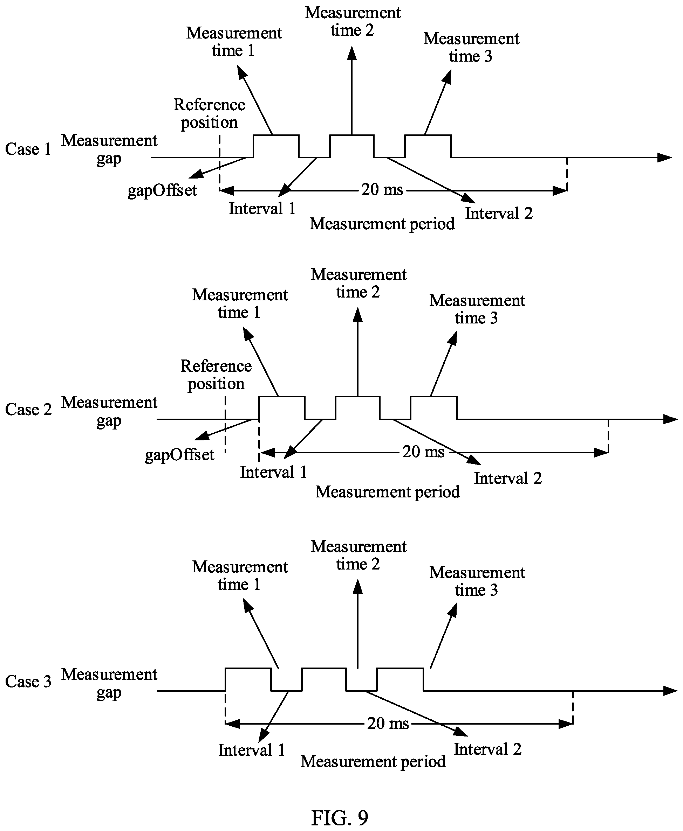

For example, FIG. 9 is a schematic scenario diagram of another type of measurement times according to an embodiment of this application. Three cases in FIG. 9 are the same as the foregoing three cases in FIG. 8, and details are not described herein again. As shown in FIG. 9, interval lengths between the measurement times are used for secondary measurement times within a measurement period. In this case, an interval length corresponding to the primary measurement time (measurement time 1) is an offset gapOffset of a measurement time pattern (gapOffset in case 3 is 0), an interval length corresponding to a measurement time 2 among the secondary measurement times is an interval 1 between a start position of the measurement time 2 and an end position of the measurement time 1, and an interval length corresponding to a measurement time 3 among the secondary measurement times is an interval 2 between a start position of the measurement time 3 and an end position of the measurement time 2.

Optionally, the interval lengths between the measurement times include one or more length values. The length values are used to determine a position of the primary measurement time and positions of the secondary measurement times (in this case, the first length value is used to determine a position of the first measurement time, and a second length value is used to determine a position of the second measurement time), or the length values are used to determine positions of the secondary measurement times (in this case, the first length value is used to determine a position of the second measurement time, and a second length value is used to determine a position of the third measurement time, and the position of the first measurement time may be determined by gapoffset).

When the interval lengths include one length value, interval lengths between the measurement times within the measurement period are the same. In an implementation, the length value may be used for all measurement times of the period, is used for indicating an interval length between the second measurement time and the first measurement time, is used for indicating an interval length between the third measurement time and the second measurement time, and so on. The length value may be further used for indicating an offset of a measurement time pattern or the first measurement time. In an implementation, the length value may be used for secondary measurement times, is used for indicating an interval length between the second measurement time and the first measurement time, is used for indicating an interval length between the third measurement time and the second measurement time, and so on, to determine interval lengths between all secondary measurement times within a measurement period.

When the interval lengths include a plurality of length values, in an implementation, the length values may be used for all measurement times of a period, a first length value may correspond to a first measurement time within the measurement period, a second length value may correspond to a second measurement time within the measurement period, a third length value may correspond to a third measurement time within the measurement period, and so on. In this case, the first length value may be used for indicating an offset of a measurement time pattern or the first measurement time (that is, the first length value is used for determining a position of the first measurement time), the second length value is used for indicating an interval length between the second measurement time and the first measurement time, the third length value is used for indicating an interval length between the third measurement time and the second measurement time, and so on. In another implementation, the length values may be used for secondary measurement times of the period, a first length value may correspond to a second measurement time, and a second length value may correspond to a third measurement time. In this case, the first length value may be used for indicating an interval length of the second measurement time relative to the first measurement time, and the second length value may be used for indicating an interval length of the third measurement time relative to the second measurement time, and so on.

Lengths of the measurement times: The lengths of the measurement times refer to lengths of all the measurement times. The lengths of all the measurement times may be the same or different, or lengths of some of the measurement times may be the same, while lengths of the remaining measurement times may be different. In a case, a plurality of measurement time length values may be configured. A first value is used for indicating a length of a first measurement time, and a second value is used for indicating a length of a second measurement time. In a case, a measurement time length value of a period is configured, and a length of each measurement time is obtained according to a quantity of the measurement times. For example, if a measurement time length value within a period is 3 ms and one measurement time is provided, one period includes only one measurement time whose measurement time length is 5 ms. If a measurement time length value within a period is 3 ms and two measurement times are provided, one period includes only one measurement time with a measurement time length of 1.5 ms.

Quantity of the measurement times: This refers to a quantity of measurement times included in the measurement period, and the quantity is greater than or equal to 2, that is, the measurement period includes at least two measurement times. In a case, the quantity of the measurement times may be 1.

Offsets of the measurement times: used to indicate offsets of the measurement times within the measurement period.

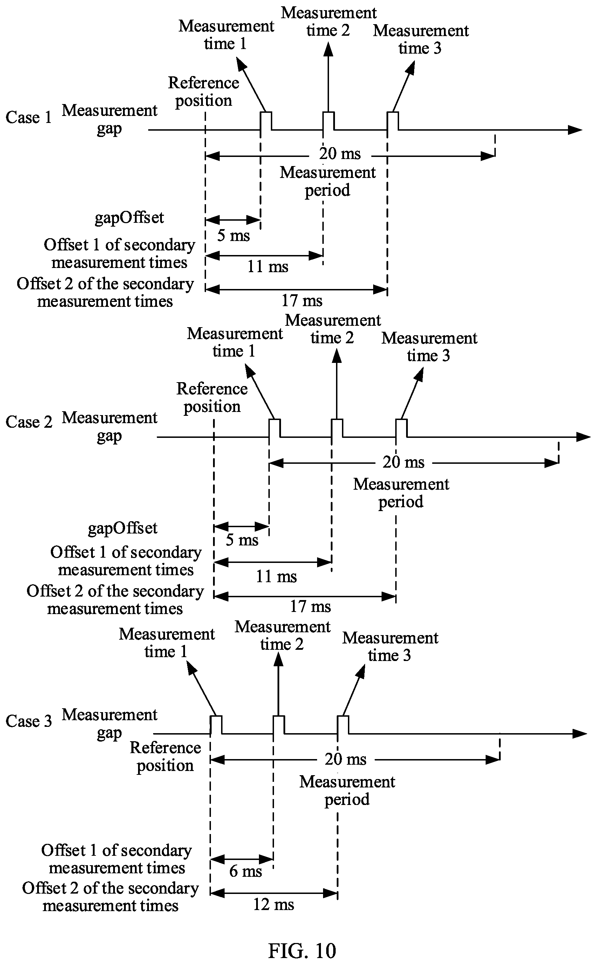

In an implementation, the offsets of the measurement times include the offset gapOffset of the measurement time pattern and the offsets of the secondary measurement times. For example, FIG. 10 is a schematic scenario diagram of still another type of measurement times according to an embodiment of this application. In FIG. 10, an example in which a position where gapOffset is 0 is used as a reference position and a start position of a measurement period is the same as the reference position is used in case 1; an example in which a position where gapOffset is 0 is used as a reference position and a start position of a measurement period is the same as a start position of a first measurement time (measurement time 1) is used in case 2; and an example in which a position where gapOffset is 0, a start position of a measurement period, and a start position of a first measurement time (measurement time 1) are all the same is used in case 3.

In case 1 and case 2, as shown in FIG. 10, an offset gapOffset of a measurement time pattern is 5 ms, and offsets of secondary measurement times include an offset 1 of the secondary measurement times and an offset 2 of the secondary measurement times. The offset gapOffset of the measurement time pattern is an offset of a start position of a primary measurement time relative to the reference position, the offset 1 of the secondary measurement times is an offset of a start position of the first measurement time among the secondary measurement times relative to the reference position, and the offset 2 of the secondary measurement times is an offset of a start position of the second measurement time among the secondary measurement times relative to the reference position.

In case 3, as shown in FIG. 10, the offset gapOffset of the measurement time pattern is 0 ms, and the offsets of the secondary measurement times include an offset 1 of the secondary measurement times and an offset 2 of the secondary measurement times. The offset 1 of the secondary measurement times is an offset of a start position of the first measurement time among the secondary measurement times relative to the reference position (or referred to as a start position of the measurement time 1, or referred to as a start position of the measurement period), and the offset 2 of the secondary measurement times is an offset of a start position of the second measurement time among the secondary measurement times relative to the reference position (or referred to as a start position of the measurement time 1, or referred to as a start position of the measurement period).

In another implementation, the offsets of the measurement times include offsets of the secondary measurement times, and the offsets are used to determine a start position of each of the secondary measurement times. In this implementation, configuration information indicated by first indication information further includes an offset gapOffset of a measurement time pattern, to determine an offset of the primary measurement time.

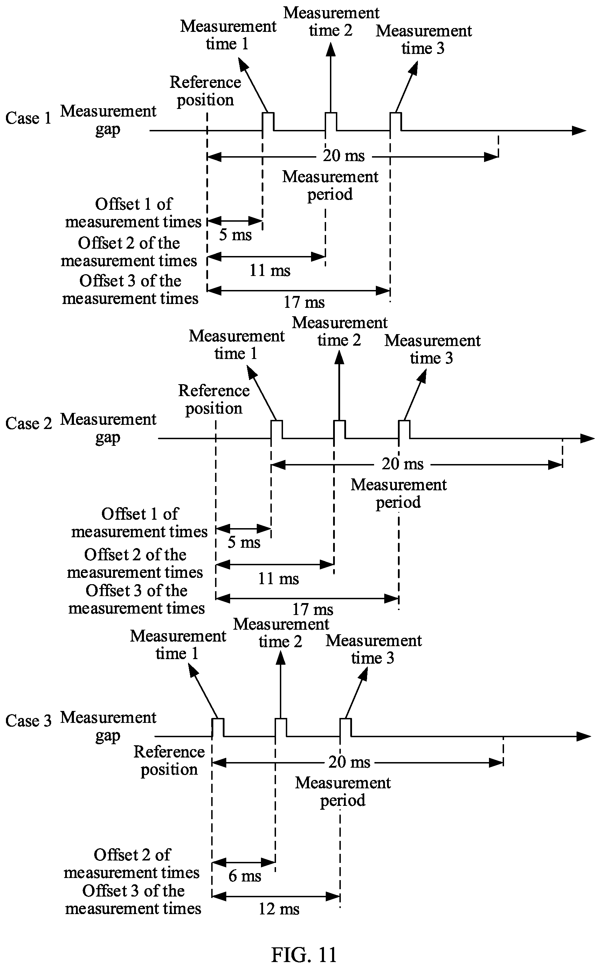

In still another implementation, the offsets of the measurement times are offsets of the measurement times within the measurement period. In this case, the offsets of the measurement times may indicate only offsets of the measurement times within the measurement period, but do not indicate an offset of the measurement time pattern. For example, FIG. 11 is a schematic scenario diagram of yet another type of measurement times according to an embodiment of this application. In FIG. 11, an example in which a position where gapOffset is 0 is used as a reference position and a start position of a measurement period is the same as the reference position is used in case 1; an example in which a position where gapOffset is 0 is used as a reference position and a start position of a measurement period is the same as a start position of a first measurement time (measurement time 1) is used in case 2; and an example in which a position where gapOffset is 0, a start position of a measurement period, and a start position of a first measurement time (measurement time 1) are all the same is used in case 3.

In case 1 and case 2, as shown in FIG. 11, offsets of the measurement times include an offset of the primary measurement time (offset 1 of the measurement times, 5 ms), an offset of the first measurement time among the secondary measurement times (offset 2 of the measurement times, 11 ms), and an offset of the second measurement time among the secondary measurement times (offset 3 of the measurement times, 17 ms).

In case 3, the offset of the primary measurement time included in the offsets of the measurement times is 0, or the offset 0 of the primary measurement time is not indicated in the offsets of the measurement times, to represent the offset 0 of the primary measurement time by default.

The first indication information in this step may be obtained by a terminal device from the terminal device, or may be obtained by the terminal device from a network device. For example, the first indication information is sent by the network device to the terminal device. The terminal device obtains the first indication information by receiving the first indication information sent by the network device.

That the first indication information indicates one piece of information may be that the information is determined according to the first indication information.

S502: The terminal device obtains positions of at least two measurement times according to the first indication information.

Positions of the measurement times may be start positions of the measurement times in a time domain, or positions of duration of the measurement times in a time domain. For example, when lengths of the measurement times are predefined, the terminal device may determine the positions of the measurement times in a time-domain resource merely by determining the start positions of the measurement times. When the lengths of the measurement times are determined according to the lengths of the measurement times indicated by the first indication information, the positions of the measurement times in the time-domain resource may be determined according to the determined start positions of the measurement times and the lengths of the measurement times indicated by the first indication information. Subsequent embodiments are described with an example in which the positions of the measurement times are start positions in the time-domain resource.

The terminal device may obtain moments of start positions of the at least two measurement times within the measurement period according to the first indication information. Alternatively, the terminal device may obtain, according to the first indication information, system frame numbers of start positions of the at least two measurement times, and subframes corresponding to the start positions within the system frame numbers.

It should be understood that because the at least two measurement times are periodically configured, a start position of the measurement period may be a start position of the first measurement time, or may be a position other than the start position of the first measurement time. This is not limited in this application.

The terminal device may determine the positions of the at least two measurement times within the measurement period according to the interval lengths between the measurement times, the lengths of the measurement times, and the quantity of the measurement times. Alternatively, the terminal device may determine the positions of the at least two measurement times within the measurement period according to the interval lengths between the measurement times, the lengths of the measurement times, and a quantity of intervals between the measurement times. Alternatively, the terminal device may determine the positions of the at least two measurement times within the measurement period according to the offsets of the measurement times, the lengths of the measurement times, and the quantity of the measurement times. Alternatively, the terminal device may determine the positions of the at least two measurement times within the measurement period according to the offsets of the measurement times, the interval lengths between the measurement times, the lengths of the measurement times, and the quantity of the measurement times. The foregoing multiple implementations are described in detail in subsequent embodiments.

S503: The terminal device configures measurement times according to the positions of the at least two measurement times for measurement.

The terminal device configures the measurement times within the measurement period according to the position configuration of the at least two measurement times, so that the measurement period may include at least two measurement times with relatively large lengths and with intervals therebetween. The terminal device performs measurement in the corresponding measurement times, thereby reducing duration of an impact on transmission of service data and improving efficiency of the service data transmission.

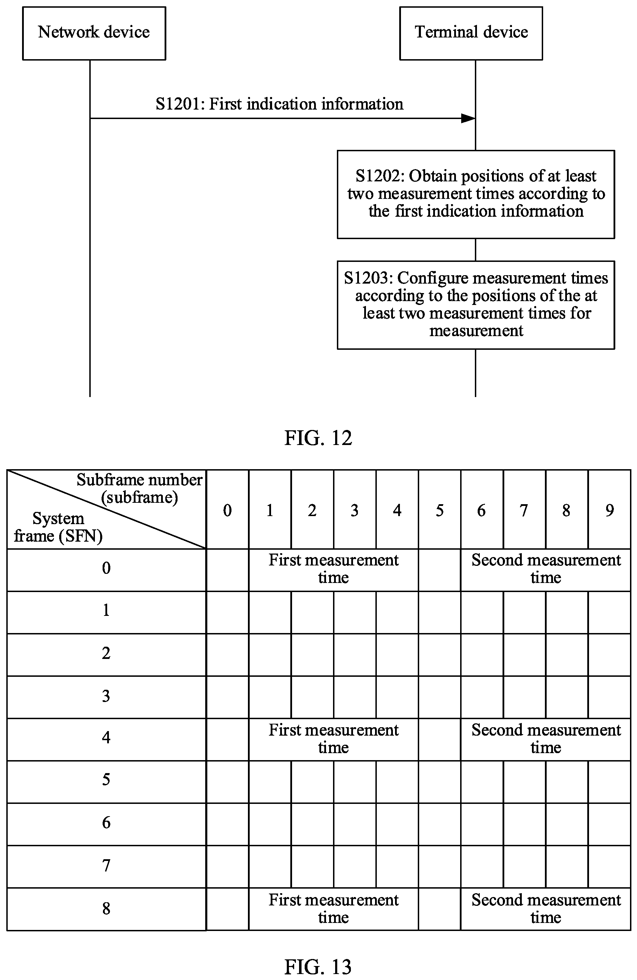

An example in which first indication information is sent by a network device to a terminal device is used below. FIG. 12 is a schematic flowchart of another measurement time configuration method according to an embodiment of this application. As shown in FIG. 12, the method may include the following steps.

S1201: A network device sends first indication information to a terminal device.

Correspondingly, the terminal device receives the first indication information sent by the network device.

S1202: The terminal device obtains positions of at least two measurement times according to the first indication information.

S1203: The terminal device configures measurement times according to the positions of the at least two measurement times for measurement.

According to the method provided in this embodiment of this application, the terminal device determines positions of at least two measurement times within a measurement period according to first indication information obtained from the network device and used for indicating configuration information of the at least two measurement times within the measurement period, and configures measurement times according to the positions of the at least two measurement times for measurement. Within the measurement period, an overlapping area between the measurement times and service data transmission is reduced by using measurement times with small lengths and with intervals therebetween, to reduce a conflict between the measurement times and the service data transmission, thereby reducing an impact of the measurement times on the service data transmission, and improving efficiency of the service data transmission.

How to configure at least two measurement times with relatively small lengths and with intervals therebetween within the measurement period indicated by the first indication information in the foregoing embodiment is described in detail below.

Implementation 1: Configuration is performed according to interval lengths between measurement times.

In this implementation, an example in which the interval length between the measurement times is a third interval length between an end position and a start position that are of adjacent measurement times respectively is used for description. Another implementation of the interval length is similar thereto, and details are not described in this application again.

Case 1: Interval lengths between measurement times are used for all measurement times within a measurement period.

In a possible implementation, the configuration information indicated by the first indication information includes interval lengths between the measurement times. The position of the first measurement time may be determined according to an interval length corresponding to the first measurement time within the measurement period. After the position of the first measurement time is determined, according to the interval length corresponding to the second measurement time, the position of the second measurement time is determined though spacing by the interval length corresponding to the second measurement time after the first measurement time, and so on, to determine positions of all measurement times, and configure the measurement times according to the positions of the measurement times. In this implementation, the lengths of the measurement times and the quantity of the measurement times may be preobtained by the terminal device before the terminal device obtains the first indication information (for example, present by the network device to the terminal device), or may be predefined in a communication protocol.

In another possible implementation, the configuration information indicated by the first indication information includes interval lengths between the measurement times and lengths of the measurement times. A start position of the first measurement time may be determined according to an interval length corresponding to the first measurement time within the measurement period, and an end position of the first measurement time may be determined according to the length of the first measurement time. A start position of the second measurement time is determined according to an interval length corresponding to the second measurement time and the end position of the first measurement time, an end position of the second measurement time is determined according to a length of the second measurement time, and so on, to determine positions of all measurement times, and configure the measurement times according to the positions of the measurement times. In this implementation the quantity of the measurement times may be preobtained by the terminal device before the terminal device obtains the first indication information (for example, present by the network device to the terminal device), or may be predefined in a communication protocol.

In another possible implementation, the configuration information indicated by the first indication information includes interval lengths between the measurement times, lengths of the measurement times, and a quantity of the measurement times.

For example, still referring to FIG. 8, an example in which the configuration information indicated by the first indication information includes interval lengths between three measurement times and each interval length is 2 ms is used. The interval lengths between the measurement times included in the configuration information may be configured in the following two forms: form 1: interval lengths between the measurement times {2 ms, 2 ms, 2 ms}; and form 2: Interval lengths between measurement times {2 ms}. If the interval lengths are different, for example, the interval 1 is 2 ms, the interval 2 is 3 ms, and the interval 3 is 4 ms, the interval lengths between the measurement times included in the configuration information may be configured as follows: interval lengths between the measurement times {2 ms, 3 ms, 4 ms}.

Case 2: Interval lengths between the measurement times are used for secondary measurement times within a measurement period.

In a possible implementation, the configuration information indicated by the first indication information includes interval lengths between the measurement times, and gapOffset. The position of the first measurement time may be determined according to gapOffset. After the position of the first measurement time is determined, according to an interval length (namely a first interval length) corresponding to the second measurement time, the position of the second measurement time is determined though spacing by the first interval length after the first measurement time, and so on, to determine positions of all measurement times, and configure the measurement times according to the positions of the measurement times. In this implementation, the lengths of the measurement times and the quantity of the measurement times may be preobtained by the terminal device before the terminal device obtains the first indication information (for example, present by the network device to the terminal device), or may be predefined in a communication protocol.

In another possible implementation, the configuration information indicated by the first indication information includes interval lengths between the measurement times, gapOffset, and lengths of the measurement times. A start position of the first measurement time may be determined according to gapOffset, and an end position of the first measurement time may be determined according to the length of the first measurement time. A start position of the second measurement time is determined according to an interval length corresponding to the second measurement time (namely the first interval length) and the end position of the first measurement time, an end position of the second measurement time is determined according to a length of the second measurement time, and so on, to determine positions of all measurement times, and configure the measurement times according to the positions of the measurement times. In this implementation the quantity of the measurement times may be preobtained by the terminal device before the terminal device obtains the first indication information (for example, present by the network device to the terminal device), or may be predefined in a communication protocol.

In another possible implementation, the configuration information indicated by the first indication information includes interval lengths between the measurement times, gapOffset, lengths of the measurement times, and a quantity of the measurement times.

For example, still referring to FIG. 9, an example in which the configuration information indicated by the first indication information includes interval lengths between secondary measurement times and each interval length is 2 ms is used. The interval lengths between the measurement times included in the configuration information may be configured in the following two forms: form 1: interval lengths between the measurement times {2 ms, 2 ms}; and form 2: Interval lengths between measurement times {2 ms}. If the interval lengths are different, for example, the interval 2 is 3 ms and the interval 3 is 4 ms, the interval lengths between the measurement times included in the configuration information may be configured as follows: interval lengths between the measurement times {2 ms, 3 ms, 4 ms}. In the foregoing two cases, assuming that an interval length between the measurement time 1 and the reference position is 2 ms, gapOffset in the configuration information may be configured as gapOffset (2).

Implementation 2: Configuration is performed according to offsets of the measurement times.

Case 1: The offsets of the measurement times are used for all measurement times within a measurement period.

In a possible implementation, the configuration information indicated by the first indication information includes the offsets of the measurement times. The offsets of the measurement times are offsets of all measurement times within the measurement period relative to the measurement period. Positions of the measurement times may be determined according to the offsets, and corresponding measurement times are configured according to the positions of the measurement times and lengths of the measurement times. In this implementation, the lengths of the measurement times and the quantity of the measurement times may be preobtained by the terminal device before the terminal device obtains the first indication information (for example, present by the network device to the terminal device), or may be predefined in a communication protocol. For example, the offsets of the measurement times are offsets of start positions of the measurement times within the measurement period relative to a reference position. The reference position may be determined according to an actual requirement, for example, may be a start position of the measurement period, or any position within the measurement period.

In another possible implementation, the configuration information indicated by the first indication information may include, in addition to the offsets of the measurement times, lengths of the measurement times and/or a quantity of the measurement times.

Case 2: The offsets of the measurement times are used for secondary measurement times within the measurement period.

In a possible implementation, the configuration information indicated by the first indication information includes offsets of the measurement times, and gapOffset. The offsets of the measurement times are offsets of the secondary measurement times. The position of the primary measurement time may be determined according to gapOffset (similar to an existing manner of determining a start position of a measurement gap by using gapOffset, and details are not described herein again). After the position of the primary measurement time is determined, positions of the secondary measurement times are determined according to offsets of the secondary measurement times, and corresponding measurement times are configured according to the position of the primary measurement time, and the positions of the secondary measurement times. In this implementation, the lengths of the measurement times and the quantity of the measurement times may be preobtained by the terminal device before the terminal device obtains the first indication information (for example, present by the network device to the terminal device), or may be predefined in a communication protocol. For example, the offsets of the secondary measurement times are offsets of start positions of the secondary measurement times relative to a reference position. The reference position may be determined according to an actual requirement, for example, may be a start position of the measurement period, a position where gapOffset is 0, or a start position of the primary measurement time.

In another possible implementation, the configuration information indicated by the first indication information may include, in addition to the offsets of the measurement times, lengths of the measurement times and/or a quantity of the measurement times.

According to the method provided in this embodiment of this application, positions of at least two measurement times within the measurement period can be flexibly indicated to the terminal device by using configuration information indicated by various types of first indication information, so that when the terminal device performs measurement within the measurement period, a conflict between the measurement times and service data transmission can be reduced, thereby improving efficiency of the service data transmission.

The positions of the measurement times involved in this application may be calculated based on a position expression method used in a communication protocol used by the network device and the terminal device. The position expression method is not limited in this application. For example, in NR, a position expression method for the positions of the measurement times is represented by using a system frame and a subframe in the system frame.

In the following, with NR as an example, start positions of the measurement times are indicated by subframes in system frames, and how to determine subframes occupied by the measurement times is described.

The positions of the measurement times occupy at least one subframe. The subframes occupied by the measurement times may be determined according to the system frames to which the subframes belong and positions of the subframes in the system frames to which the subframes belong. For example, an example in which a system frame includes 10 subframes, each subframe is 1 ms, and the length of the measurement time 1 is 3 ms is used. Subframes occupied by the measurement time 1 may include the third subframe, the fourth subframe, and the fifth subframe in the system frame 1.

In this step, only a subframe in which a start position of each measurement times is located need to be determined, and then, according to a length of each measurement time and the subframe in which the start position of the measurement time is located, a quantity of subframes after the start position that belong to the measurement time may be determined. Therefore, how to determine a subframe in which a start position of each measurement time is located is described subsequently mainly, and a method for determining, according to the subframe in which the start position is located and the length of the measurement time, subframes included in the measurement time is not described in detail.

Methods for determining positions of measurement times within a period include the following methods:
Method 1: Calculation is performed according to offsets of measurement times.

The offsets of the measurement times may be offsets corresponding to all measurement times within a measurement period, or may be offsets corresponding to all measurement times within a measurement time pattern.
(1) When offsets of measurement times corresponding to all the measurement times are determined by using the first indication information, a system frame number and a subframe number of each measurement time may be calculated according to a measurement time offset corresponding to the measurement time.

In this implementation, a system frame number and a subframe number of each measurement time may be calculated by using the following formula (1) and formula (2): $SFN \left(i\right) mod T = FLOOR \left(gapOffset1\left(i\right)/10\right)$ (1); and $subframe \left(i\right) = gapOffset 1 \left(i\right) mod 10$ (2),
where *SFN(i)* is a frame number of a system frame in which a subframe corresponding to a start position of an *i*^{th} measurement time is located, i is greater than or equal to 1, *gapOffset*1(*i*) is an offset of the *i*^{th} measurement time (the start position), *T* is a length of the measurement period, *T* = *mrgp*/10, *mod* is a modulo operator, and *FLOOR* is a floor function. *subframe*(*i*) is a subframe number of the subframe corresponding to the start position of the *i*^{th} measurement time. The system frame number of the system frame in which the start position of the i ^{th} measurement time is located can be determined by using formula (1). The subframe number of the subframe in which the start position of the *i*^{th} measurement time is located can be determined by using formula (2).

Optionally, the offset of the *i*^{th} measurement time (start position) may be expressed as the sum of lengths of previous *i* - 1 measurement times and interval lengths between measurement times corresponding to previous *i* measurement times, namely: $gapOffset 1 \left(i\right) = gapOffset + {\sum }_{1}^{i} gap \left(i\right) + Lengh \left(i-1\right)$ (3),
where *i* is greater than or equal to 2, *gap(i)* is an interval length between the start position of the *i* ^{th} measurement time and an end position of a previous measurement time, *gapOffset* is an offset of a measurement time pattern, namely an offset of an initial position of the first measurement time (equivalent to an interval length between measurement times corresponding to the first measurement time), and *Lengh*(*i*) is the length of the *i*^{th} measurement time.*gap*(*i*) may be configured in units of subframes, or configured in units of time. The unit of the time may be, for example, ms.

If an interval length between measurement times is a length of an interval between a start position of a measurement time and a start position of a previous measurement time, an offset of the *i* ^{th} measurement time (start position) may be expressed by the sum of interval lengths between measurement times corresponding to previous *i* measurement times, namely: $gapOffset 1 \left(i\right) = gapOffset + {\sum }_{2}^{i} gap \left(i\right)$ (4),
where *i* is greater than or equal to 2, *gap(i)* is an interval length between the start position of the *i* ^{th} measurement time and a start position of a previous measurement time, and *gapOffset* is an offset of a measurement time pattern, namely an offset of an initial position of the first measurement time (equivalent to an interval length between measurement times corresponding to the first measurement time).

If the offset of the initial position of the first measurement time is directly indicated as gap(1), formula (3) may be further converted into: $gapOffset 1 \left(i\right) = {\sum }_{1}^{i} gap \left(i\right) + Lengh \left(i-1\right)$ (5),
where *i* is greater than or equal to 1. *gap*(*i*) is the interval length between the start position of the *i*^{th} measurement time and the end position of the previous measurement time.

Optionally, the offset of the *i* ^{th} measurement time (start position) may alternatively be expressed as the sum of an offset of a measurement time preceding the *i* ^{th} measurement time, an interval between corresponding measurement times, and lengths of the corresponding measurement times. For example, the third measurement time may be expressed as the sum of an offset of the first measurement time, a length of the first measurement time, an interval length corresponding to the second measurement time, a length of the second measurement time, and an interval length corresponding to the third measurement time. Alternatively, the third measurement time may be expressed as the sum of an offset of the second measurement time, a length of the second measurement time, and an interval length corresponding to the third measurement time.

In this implementation, principles of the foregoing formula (1) and formula (2) are briefly described. For example, FIG. 13 is a schematic structural diagram of system frames according to an embodiment of this application. As shown in FIG. 13, each system frame includes 10 subframes, and each subframe is 1 ms. Taking lengths of measurement times as 4 ms, a measurement period mrgp as 40 ms, *gapOffset*1(1) as 1 ms, and *gapOffset*1(2) as 6 ms as an example, $SFN \left(1\right) mod \left(40/10\right) = FLOOR \left(1/10\right)$ $subframe \left(1\right) = 1 mod 10$
it may be concluded that system frames may be 0, 4, 8, ..., and subframes in the system frames are 1. That is, in FIG. 13, when the system frames are 0, 4, 8, ..., a start position of the first measurement time is the subframe 1 in the system frames. Since the lengths of the measurement times are 4 ms, the subframes occupied by the position of the first measurement time are subframes 1 to 4 in the system frames 0, 4, 8, ... $SFN \left(2\right) mod \left(40/10\right) = FLOOR \left(6/10\right)$ $subframe \left(2\right) = 6 mod 10$

It may be concluded that system frames may be 0, 4, 8, ..., and subframes in the system frames are 6. That is, in FIG. 13, when the system frames are 0, 4, 8, ..., a start position of the second measurement time is the subframe 6 in the system frames. Since the lengths of the measurement times are 4 ms, the subframes occupied by the position of the first measurement time are subframes 6 to 9 in system frames 0, 4, 8, ...

(2) When offsets of measurement times corresponding to secondary measurement times are determined by using the first indication information, system frame numbers and subframe numbers of the secondary measurement times may be calculated according to offsets of measurement times corresponding to the secondary measurement times. In this case, the position of the primary measurement time is calculated by using gapOffset. The gapOffset may be indicated by the first indication information, or may be indicated by other indication information.

First, a system frame number and a subframe number of the primary measurement time are calculated. In this implementation, the system frame number and the subframe number of the primary measurement time may be calculated by using the following formula (6) and formula (7): $SFN \left(1\right) mod T = FLOOR \left(gapOffset/10\right)$ (6); and $subframe 1 = gapOffset mod 10$ (7),
where *SFN*(1) is a system frame number of a system frame in which a start position of the primary measurement time is located, and *gapOffset* is an offset of the foregoing measurement time pattern. *subframe*1 is a subframe number of a subframe occupied by the start position of the primary measurement time in the system frame.

Then, system frame numbers and subframe numbers of the secondary measurement times are calculated. In this implementation, the system frame numbers and the subframe numbers of the secondary measurement times may be calculated by using the following formula (8) and formula (9): $SFN \left(i\right) mod T = FLOOR \left(gapOffset2\left(i\right)/10\right)$ (8); and $subframe \left(i\right) = gapOffset 2 \left(i\right) mod 10$ (9),
where *SFN*(*i*) is a system frame number of a system frame where a start position of an *i*^{th} secondary measurement time is located, and *subframe*(*i*) is a subframe number of a subframe occupied by the start position of the *i*^{th} secondary measurement time in the system frame.*gapOffset*2(*i*) is an offset of a measurement time corresponding to the *i*^{th} secondary measurement time, and *i* is greater than or equal to 1.

Method 2: The secondary measurement times are calculated according to the position of the primary measurement time.

A system frame number of the primary measurement time is calculated, and system frame numbers of the secondary measurement times are calculated according to the system frame number of the primary measurement time. System frames of the secondary measurement times are obtained according to a quantity of system frames by which the primary measurement time and the secondary measurement times differ, and then subframe positions of the secondary measurement times in the system frames are calculated according to offsets of the secondary measurement times. The quantity of system frames by which the primary measurement time and the secondary measurement times differ may be obtained according to intervals between the offset of the primary measurement time and the offsets of the secondary measurement times. Calculation is performed below with an example in which the offset of the primary measurement time is gapOffset, where *gapOffset* is in units of subframes or ms. In this case, one *SFN* includes 10 ms or 10 subframes: $SFN \left(i\right) = SFN \left(1\right) + FLOOR \left(\frac{gapOffset 2 \left(i\right) - gapOffset}{10}\right)$ (10).

In this implementation, a subframe number *subframe*(*i*) of a subframe occupied by a start position of the *i*^{th} secondary measurement time may be calculated according to the foregoing formula (7). When *gapOffset* is in units of time slots, in this case, if one *SFN* includes 10 ms or 10 × N time slots, $FLOOR \left(\frac{gapOffset 2 \left(i\right) - gapOffset}{10 ∗ N}\right) .$

Method 3: Calculation is performed according to adjacent measurement times.

Subframes corresponding to start positions of secondary measurement times may be calculated according to a measurement time interval length between a start position of each secondary measurement time and a start position of a previous measurement time. The calculation manner may be implemented by using the following formula (11) and formula (12): $SFN \left(i\right) = SFN \left(i-1\right) + FLOOR \left(gap\left(i\right)/10\right)$ (11); and $subframe \left(i\right) = gapOffset mod 10$ (12),
where *i* is greater than or equal to 2. *gap*(*i*) is a measurement time interval length between a start position of the *i*^{th} measurement time and a start position of a previous measurement time within a measurement period.

Alternatively, subframes corresponding to start positions of the secondary measurement times may be calculated according to the subframe corresponding to the start position of the primary measurement time and a measurement time interval length between a start position of each secondary measurement time and a start position of a previous measurement time. The calculation manner may be implemented by using the following formula (13) and formula (14): $SFN \left(i\right) = SFN \left(1\right) + FLOOR \left(\frac{{\sum }_{1}^{i} gap \left(i\right) + Lengh \left(i-1\right)}{10}\right)$ (13); and $subframe \left(i\right) = \left(gapOffset+{\sum }_{1}^{i} \left(gap\left(i\right)+Lengh\left(i-1\right)\right)\right) mod 10$ (14),
where *i* is greater than or equal to 2. *Lengh*(*i*) is a length of the *i*^{th} measurement time within the measurement period.

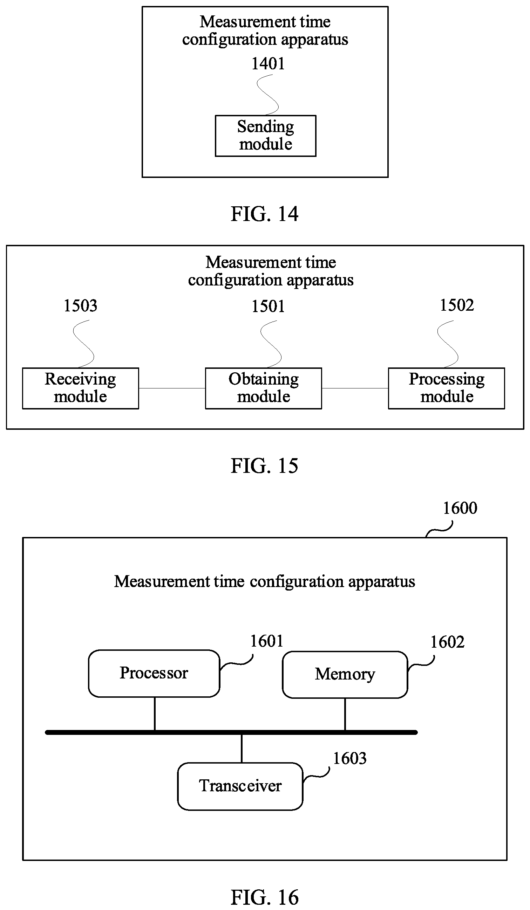

FIG. 14 is a schematic structural diagram of a measurement time configuration apparatus according to an embodiment of this application. It may be understood that the measurement time configuration apparatus may correspondingly implement operations or steps of a corresponding network device in the foregoing method embodiments. The measurement time configuration apparatus may be a network device or a component, such as a chip or a chip module, configurable in a network device. As shown in FIG. 14, the measurement time configuration apparatus may include a sending module 1401. Optionally, the sending module 1401 and a receiving module may be integrated into a transceiver module, or may be separated.

The sending module 1401 is configured to send first indication information to a terminal device, where the first indication information may be used for indicating configuration information of at least two measurement times within a measurement period.

Optionally, the configuration information includes at least one of the following: interval lengths between the measurement times, lengths of the measurement times, a quantity of the measurement times, and offsets of the measurement times.

Optionally, the offsets of the measurement times include an offset of a primary measurement time and/or offsets of secondary measurement times within the measurement period, the primary measurement time is a first measurement time within the measurement period, and the secondary measurement times are measurement times within the measurement period other than the primary measurement time.

Optionally, if the offsets of the measurement times include the offset of the primary measurement time and the offsets of the secondary measurement times within the measurement period, the offset of the primary measurement time within the measurement period is an offset of a measurement time pattern of the primary measurement time.

Optionally, if the offsets of the measurement times include the offset of the primary measurement time and the offsets of the secondary measurement times within the measurement period, the offset of the primary measurement time is an offset of the primary measurement time relative to a reference position, and the offsets of the secondary measurement times are offsets of the secondary measurement times relative to the reference position.

Optionally, the reference position is a start position of the measurement period, or the reference position is a start position of the primary measurement time, or the reference position is a position at which an offset of a measurement time pattern is a target value.

Optionally, the target value is 0.

Optionally, the interval lengths between the measurement times are interval lengths between measurement times within the measurement period, and the interval lengths between the measurement times are applied to a primary measurement time and/or secondary measurement times.

Optionally, the interval lengths between the measurement times include a plurality of length values. If the interval lengths between the measurement times are applied to the primary measurement time and the secondary measurement times, an N^{th} length value among the interval lengths between the measurement times is used for indicating an interval length between an N^{th} measurement time and a (N-1)^{th} measurement time within the measurement period, and N is an integer greater than or equal to 2.

Optionally, a first length value among the interval lengths between the measurement times is a value of an offset of the primary measurement time, or is a value of an offset of a measurement time pattern of the primary measurement time.

Optionally, if the interval lengths between the measurement times are applied to the secondary measurement times, the N^{th} length value among the interval lengths between the measurement times is used for indicating an interval length between a (N+1)^{th} measurement time and the N^{th} measurement time within the measurement period, and N is an integer greater than or equal to 1.

Optionally, interval lengths between adjacent measurement times among the at least two measurement times are the same, or measurement time lengths are the same.

The measurement time configuration apparatus provided in this embodiment may perform actions of the network device in the foregoing method embodiments, and an implementation principle and a technical effect of the measurement time configuration apparatus are similar. Details are not described herein again.

FIG. 15 is a schematic structural diagram of another measurement time configuration apparatus according to an embodiment of this application. It may be understood that the measurement time configuration apparatus may correspondingly implement operations or steps of a corresponding terminal device in the foregoing method embodiments. The measurement time configuration apparatus may be a terminal device or a component, such as a chip or a chip module, configurable in a terminal device. As shown in FIG. 15, the measurement time configuration apparatus may include: an obtaining module 1501 and a processing module 1502. In a possible implementation, the apparatus further includes a receiving module 1503. Optionally, the receiving module 1503 and the sending module may be integrated into a transceiver module, or may be separated.

The obtaining module 1501 is configured to obtain first indication information, where the first indication information may be used for indicating configuration information of at least two measurement times within a measurement period.

The processing module 1502 is configured to obtain positions of the at least two measurement times according to the first indication information.

Optionally, the receiving module 1503 is configured to receive the first indication information sent by a network device.

Optionally, the configuration information includes at least one of the following: interval lengths between the measurement times, lengths of the measurement times, a quantity of the measurement times, and offsets of the measurement times.

Optionally, the offsets of the measurement times include an offset of a primary measurement time and/or offsets of secondary measurement times within the measurement period, the primary measurement time is a first measurement time within the measurement period, and the secondary measurement times are measurement times within the measurement period other than the primary measurement time.

Optionally, if the offsets of the measurement times include the offset of the primary measurement time and the offsets of the secondary measurement times within the measurement period, the offset of the primary measurement time within the measurement period is an offset of a measurement time pattern of the primary measurement time.

Optionally, if the offsets of the measurement times include the offset of the primary measurement time and the offsets of the secondary measurement times within the measurement period, the offset of the primary measurement time is an offset of the primary measurement time relative to a reference position, and the offsets of the secondary measurement times are offsets of the secondary measurement times relative to the reference position.

Optionally, the reference position is a start position of the measurement period, or the reference position is a start position of the primary measurement time, or the reference position is a position at which an offset of a measurement time pattern is a target value.

Optionally, the target value is 0.

Optionally, the interval lengths between the measurement times are interval lengths between measurement times within the measurement period, and the interval lengths between the measurement times are applied to a primary measurement time and/or secondary measurement times.

Optionally, the interval lengths between the measurement times include a plurality of length values. If the interval lengths between the measurement times are applied to the primary measurement time and the secondary measurement times, an N^{th} length value among the interval lengths between the measurement times is used for indicating an interval length between an N^{th} measurement time and a (N-1)^{th} measurement time within the measurement period, and N is an integer greater than or equal to 2.

Optionally, a first length value among the interval lengths between the measurement times is a value of an offset of the primary measurement time, or is a value of an offset of a measurement time pattern of the primary measurement time.

Optionally, if the interval lengths between the measurement times are applied to the secondary measurement times, the N^{th} length value among the interval lengths between the measurement times is used for indicating an interval length between a (N+1)^{th} measurement time and the N^{th} measurement time within the measurement period, and N is an integer greater than or equal to 1.

Optionally, interval lengths between adjacent measurement times among the at least two measurement times are the same, or measurement time lengths are the same.

Optionally, the processing module 1502 is specifically configured to obtain offsets of the measurement times according to the first indication information, and obtain positions of the measurement times according to the offsets of the measurement times.

Optionally, the processing module 1502 is specifically configured to determine lengths of the measurement times or interval lengths between the measurement times according to the first indication information, and obtain offsets of the measurement times according to the lengths of the measurement times or the interval lengths between the measurement times.

Optionally, the processing module 1502 is specifically configured to obtain a position of the primary measurement time according to the offset of the primary measurement time, and determine positions of the secondary measurement times according to the position of the primary measurement time.

Optionally, the processing module 1502 is specifically configured to determine the offset of the primary measurement time according to a length of the primary measurement time, an interval length corresponding to the primary measurement time, lengths of the secondary measurement times, and interval lengths between the secondary measurement times; and obtain the positions of the secondary measurement times according to the offset of the primary measurement time.

Optionally, the processing module 1502 is specifically configured to obtain a position of the primary measurement time according to the offset of the primary measurement time, and determine, according to a position of a current measurement time, a position of an adjacent next measurement time.

Optionally, the processing module 1502 is specifically configured to obtain the position of the next measurement time according to the position of the current measurement time and an interval length between the adjacent next measurement time and the current measurement time.

Optionally, the offsets of the measurement times include the offset of the primary measurement time and the offsets of the secondary measurement times within the measurement period, and the processing module 1502 is specifically configured to determine the positions of the measurement times according to the offsets of the measurement times.

Optionally, the processing module 1502 is specifically configured to determine subframes included in the at least two measurement times, and obtain the positions of the at least two measurement times according to the subframes included in the at least two measurement times.

The measurement time configuration apparatus provided in this embodiment may perform actions of the terminal device in the foregoing method embodiments, and an implementation principle and a technical effect of the measurement time configuration apparatus are similar. Details are not described herein again.

Optionally, the measurement time configuration apparatus may further include at least one storage module. The storage module may include data and/or instructions. Other modules (for example, a receiving module, a sending module, and a processing module) in the measurement time configuration apparatus may read the data and/or instructions in the storage module, to implement a corresponding method.

It should be noted that, it should be understood that the sending module in the foregoing embodiments may be a transmitter during actual implementation, and the receiving module may be a receiver during actual implementation, or the sending module and the receiving module may be implemented by using a transceiver, or the sending module and the receiving module may be implemented by using a communication port. The processing module may be implemented in a form of invoking software by using a processing element, or may be implemented in a form of hardware. For example, the processing module may be at least one independently provided processing element, or may be integrated into a chip of the apparatus for implementation. In addition, the processing module may alternatively be stored in a memory of the apparatus in the form of program code, which is invoked by a processing element of the apparatus to perform a function of the processing module In addition, all or some of the modules may be integrated together, or may be independently implemented. The processing element herein may be an integrated circuit having a signal processing capability. In an implementation process, the steps of the foregoing method or the foregoing modules may be completed by an integrated logic circuit of hardware in the processor element or instructions in a form of software.

For example, the modules may be one or more integrated circuits configured to implement the foregoing method, for example, one or more application-specific integrated circuits (application specific integrated circuits, ASICs), or one or more microprocessors (digital signal processors, DSPs), or one or more field programmable gate arrays (field programmable gate arrays, FPGAs). For another example, when a module described above is implemented in a form of invoking program code by a processing element, the processing element may be a general-purpose processor, for example, a central processing unit (central processing unit, CPU) or another processor that can invoke program code. For another example, the modules may be integrated together and implemented in a form of a system-on-a-chip (system-on-a-chip, SOC).

FIG. 16 is a schematic structural diagram of still another measurement time configuration apparatus according to an embodiment of this application. As shown in FIG. 16, the measurement time configuration apparatus 1600 may include: at least one processor 1601, a memory 1602, and a transceiver 1603. The processor 1601, the transceiver 1603, and the memory 1602 communicate with each other through an internal connection path. The memory 1602 is configured to store instructions. The processor 1601 is configured to execute the instructions stored in the memory 1602, to control the transceiver 1603 to send indication information and/or receive indication information.

The measurement time configuration apparatus may be, for example, the foregoing network device, or the foregoing terminal device.

It should be understood that the measurement time configuration apparatus may correspond to the terminal device in the foregoing method embodiments, or may correspond to the network device in the foregoing method embodiments. The apparatus may be configured to perform steps and/or procedures performed by the terminal device or the network device in the foregoing method embodiments. Optionally, the memory 1602 may include a read-only memory and a random access memory, and provide instructions and data to the processor 1601. A part of the memory 1602 may further include a non-volatile random access memory. The memory 1602 may be a separate device, or may be integrated into the processor 1601. The processor 1601 may be configured to execute the instructions stored in the memory 1602, and when the processor 1601 executes the instructions stored in the memory, the processor 1601 is configured to perform the steps and/or the procedures in the foregoing method embodiments.

The transceiver 1603 may include a transmitter and a receiver. The transceiver 1603 may further include an antenna. One or more antennas may be provided. The processor 1601, the memory 1602, and the transceiver 1603 may be devices integrated on different chips. For example, the processor 1601 and the memory 1602 may be integrated into a baseband chip, and the transceiver 1603 may be integrated into a radio frequency chip. The processor 1601, the memory 1602, and the transceiver 1603 may alternatively be devices integrated on a same chip. This is not limited in this application.

Optionally, the measurement time configuration apparatus is a component, such as a chip or a chip system, configured in a terminal device or a network device.

The transceiver 1603 may alternatively be a communication interface, such as an input interface and/or an output interface, or a circuit. The transceiver 1603, the processor 1601, and the memory 1602 may all be integrated into a same chip, for example, integrated into a baseband chip.

It should be understood that the foregoing measurement time configuration apparatus may be one or more chips. For example, the measurement time configuration apparatus may be a field programmable gate array (field programmable gate array, FPGA), an application-specific integrated chip (application specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, steps in the foregoing methods can be completed by using a hardware integrated logical circuit in the processor, or by using instructions in the form of software. The steps of the method disclosed with reference to embodiments of this application may be directly performed and completed by a hardware processor, or may be performed and completed by a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory. The processor reads information from the memory and implements the steps of the methods in combination with hardware thereof. To avoid repetition, details are not described herein again.

It should be noted that, the processor in embodiments of this application may be an integrated circuit chip, and has a signal processing capability. In an implementation process, steps in the foregoing method embodiments can be completed by using a hardware integrated logical circuit in the processor, or by using instructions in the form of software. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component, and the processor may implement or perform the methods, steps, and logical block diagrams that are disclosed in embodiments of this application. The general-purpose processor may be a microprocessor or any conventional processor or the like. The steps of the methods disclosed with reference to embodiments of this application may be directly performed and completed by using a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory. The processor reads information from the memory and implements the steps of the methods in combination with hardware thereof.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through illustrative but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories described herein are intended to include, but are not limited to, these and any other proper types of memories.

An embodiment of this application further provides a measurement time configuration system. The system includes the terminal device and the network device in the foregoing embodiments.

This application further provides a chip. The chip stores a computer program. The computer program, when executed by the chip, implements the method in the foregoing embodiments.

This application further provides a computer-readable storage medium. The computer-readable storage medium may include various media that can store program code, such as a USB flash drive, a portable hard disk, a read-only memory (ROM, Read-Only Memory), a random access memory (RAM, Random Access Memory), a magnetic disk, or an optical disc. Specifically, the computer-readable storage medium stores program instructions. When the program instructions are executed, the method in the foregoing embodiments is implemented.

This application further provides a computer program product. The program product includes executable instructions, and the executable instructions are stored in a readable storage medium. At least one processor of a communication device can read the executable instructions from the readable storage medium, and the at least one processor executes the executable instructions to cause the communication device to implement the measurement time configuration method according to each of the foregoing implementations.

Finally, it should be noted that, the foregoing embodiments are merely intended to describe the technical solutions of this application, and not to limit this application. Although this application is described in detail with reference to the foregoing embodiments, a person of ordinary skill in the art should understand that they may still make modifications to the technical solutions described in the foregoing embodiments or make equivalent substitutions to some or all technical features thereof. However, such modifications or substitutions do not cause the essence of the corresponding technical solutions to depart from the scope of the technical solutions of the embodiments of this application.

## Claims

1. A measurement time configuration method, comprising:
sending first indication information to a terminal device, wherein the first indication information is used for indicating configuration information of at least two measurement times within a measurement period.

2. The method according to claim 1, wherein the configuration information comprises at least one of the following:
interval lengths between the measurement times, lengths of the measurement times, a quantity of the measurement times, and offsets of the measurement times.

3. The method according to claim 2, wherein the offsets of the measurement times comprise an offset of a primary measurement time and/or an offset of secondary measurement time within the measurement period, the primary measurement time is a first measurement time within the measurement period, and the secondary measurement time is a measurement time within the measurement period other than the primary measurement time.

4. The method according to claim 3, wherein if the offsets of the measurement times comprise the offset of the primary measurement time and the offset of the secondary measurement time within the measurement period, the offset of the primary measurement time within the measurement period is an offset of a measurement time pattern of the primary measurement time.

5. The method according to claim 3, wherein if the offsets of the measurement times comprise the offset of the primary measurement time and the offset of the secondary measurement time within the measurement period, the offset of the primary measurement time is an offset of the primary measurement time relative to a reference position, and the offset of the secondary measurement time is an offset of the secondary measurement time relative to the reference position.

6. The method according to claim 5, wherein the reference position is a start position of the measurement period, or the reference position is a start position of the primary measurement time, or the reference position is a position at which an offset of a measurement time pattern is a target value.

7. The method according to claim 6, wherein the target value is 0.

8. The method according to claim 2, wherein the interval lengths between the measurement times are interval lengths between measurement times within the measurement period, and the interval lengths between the measurement times are applied to a primary measurement time and/or a secondary measurement time.

9. The method according to claim 8, wherein the interval lengths between the measurement times comprise a plurality of length values; and if the interval lengths between the measurement times are applied to the primary measurement time and the secondary measurement time, an N^{th} length value among the interval lengths between the measurement times is used for indicating an interval length between an N^{th} measurement time and a (N-1)^{th} measurement time within the measurement period, and N is an integer greater than or equal to 2.

10. The method according to claim 9, wherein a first length value among the interval lengths between the measurement times is a value of an offset of the primary measurement time, or is a value of an offset of a measurement time pattern of the primary measurement time.

11. The method according to any one of claims 8 to 10, wherein if the interval lengths between the measurement times are applied to the secondary measurement time, the N^{th} length value among the interval lengths between the measurement times is used for indicating an interval length between a (N+1)^{th} measurement time and the N^{th} measurement time within the measurement period, and N is an integer greater than or equal to 1.

12. The method according to any one of claims 1 to 11, wherein interval lengths between adjacent measurement times among the at least two measurement times are the same, or measurement time lengths are the same.

13. A measurement time configuration method, comprising:
obtaining first indication information, wherein the first indication information is used for indicating configuration information of at least two measurement times within a measurement period; and
obtaining positions of the at least two measurement times according to the first indication information.

14. The method according to claim 13, wherein the obtaining first indication information comprises:
receiving the first indication information sent by a network device.

15. The method according to claim 14, wherein the configuration information comprises at least one of the following:
interval lengths between the measurement times, lengths of the measurement times, a quantity of the measurement times, and offsets of the measurement times.

16. The method according to claim 14, wherein the offsets of the measurement times comprise an offset of a primary measurement time and/or an offset of a secondary measurement time within the measurement period, the primary measurement time is a first measurement time within the measurement period, and the secondary measurement time is a measurement time within the measurement period other than the primary measurement time.

17. The method according to claim 16, wherein if the offsets of the measurement times comprise the offset of the primary measurement time and the offset of the secondary measurement time within the measurement period, the offset of the primary measurement time within the measurement period is an offset of a measurement time pattern of the primary measurement time.

18. The method according to claim 16, wherein if the offsets of the measurement times comprise the offset of the primary measurement time and the offset of the secondary measurement time within the measurement period, the offset of the primary measurement time is an offset of the primary measurement time relative to a reference position, and the offset of the secondary measurement time is an offset of the secondary measurement time relative to the reference position.

19. The method according to claim 18, wherein the reference position is a start position of the measurement period, or the reference position is a start position of the primary measurement time, or the reference position is a position at which an offset of a measurement time pattern is a target value.

20. The method according to claim 19, wherein the target value is 0.

21. The method according to claim 15, wherein the interval lengths between the measurement times are interval lengths between measurement times within the measurement period, and the interval lengths between the measurement times are applied to a primary measurement time and/or a secondary measurement time.

22. The method according to claim 21, wherein the interval lengths between the measurement times comprise a plurality of length values; and if the interval lengths between the measurement times are applied to the primary measurement time and the secondary measurement time, an N^{th} length value among the interval lengths between the measurement times is used for indicating an interval length between an N^{th} measurement time and a (N-1)^{th} measurement time within the measurement period, and N is an integer greater than or equal to 2.

23. The method according to claim 22, wherein a first length value among the interval lengths between the measurement times is a value of an offset of the primary measurement time, or is a value of an offset of a measurement time pattern of the primary measurement time.

24. The method according to any one of claims 21 to 23, wherein if the interval lengths between the measurement times are applied to the secondary measurement time, the N^{th} length value among the interval lengths between the measurement times is used for indicating an interval length between a (N+1)^{th} measurement time and the N^{th} measurement time within the measurement period, and N is an integer greater than or equal to 1.

25. The method according to any one of claims 13 to 24, wherein interval lengths between adjacent measurement times among the at least two measurement times are the same, or measurement time lengths are the same.

26. The method according to claim 18, wherein the obtaining positions of the at least two measurement times according to the first indication information comprises:
obtaining the offsets of the measurement times according to the first indication information; and
obtaining the positions of the measurement times according to the offsets of the measurement times.

27. The method according to claim 26, wherein the obtaining the offsets of the measurement times according to the first indication information comprises:
determining lengths of the measurement times or interval lengths between the measurement times according to the first indication information; and
obtaining the offsets of the measurement times according to the lengths of the measurement times or the interval lengths between the measurement times.

28. The method according to claim 26 or 27, wherein the obtaining the positions of the measurement times according to the offsets of the measurement times comprises:
obtaining a position of the primary measurement time according to the offset of the primary measurement time; and
obtaining a position of the secondary measurement time according to the position of the primary measurement time.

29. The method according to claim 28, wherein the obtaining the position of the secondary measurement time according to the position of the primary measurement time comprises:
determining the offset of the primary measurement time according to a length of the primary measurement time, an interval length corresponding to the primary measurement time, a length of the secondary measurement time, and an interval length between the secondary measurement time; and
obtaining the position of the secondary measurement time according to the offset of the primary measurement time.

30. The method according to claim 18, wherein the obtaining positions of the at least two measurement times according to the first indication information comprises:
obtaining a position of the primary measurement time according to the offset of the primary measurement time; and
determining, according to a position of a current measurement time, a position of an adjacent next measurement time.

31. The method according to claim 30, wherein the determining, according to a position of a current measurement time, a position of an adjacent next measurement time comprises:
obtaining the position of the next measurement time according to the position of the current measurement time and an interval length between the adjacent next measurement time and the current measurement time.

32. The method according to claim 18, wherein the offsets of the measurement times comprise the offset of the primary measurement time and the secondary measurement timeoffset of the secondary measurement time within the measurement period, and the obtaining positions of the at least two measurement times according to the first indication information comprises:
determining the positions of the measurement times according to the offsets of the measurement times.

33. The method according to any one of claims 26 to 32, wherein the obtaining positions of the at least two measurement times comprises:
determining subframes comprised in the at least two measurement times; and
obtaining the positions of the at least two measurement times according to the subframes comprised in the at least two measurement times.

34. A measurement time configuration apparatus, the apparatus comprising:
a sending module, configured to send first indication information to a terminal device, wherein the first indication information is used for indicating configuration information of at least two measurement times within a measurement period.

35. A measurement time configuration apparatus, the apparatus comprising:
an obtaining module, configured to obtain first indication information, wherein the first indication information is used for indicating configuration information of at least two measurement times within a measurement period; and
a processing module, configured to obtain positions of the at least two measurement times according to the first indication information.

36. A measurement time configuration apparatus, the apparatus comprising: a processor, a transceiver, and a memory, wherein the processor is in communication connection with the transceiver and the memory;
the memory stores computer-executable instructions;
the transceiver performs communication interaction with an external device; and
the processor executes the computer-executable instructions stored in the memory to implement the method according to any one of claims 1 to 12 or any one of claims 13 to 33.

37. A chip, wherein the chip stores a computer program, and the computer program, when executed by the chip, implements the method according to any one of claims 1 to 12 or any one of claims 13 to 33.

38. A computer-readable storage medium, configured to store a computer program, wherein the computer program comprises instructions for implementing the method according to any one of claims 1 to 12 or any one of claims 13 to 33.

39. A computer program product, the computer program product comprising computer program code, wherein the computer program code, when run on a computer, causes the computer to implement the method according to any one of claims 1 to 12 or any one of claims 13 to 33.
